# EUROPÄISCHE PATENTSCHRIFT

(11) **EP 1 189 765 B1**
(45) Veröffentlichungstag und Bekanntmachung des Hinweises auf die Patenterteilung: **09.04.2003**
(21) Anmeldenummer: 00940259.5
(22) Anmeldetag: 20.05.2000
(51) Int. Cl.: B60B 3/06, B60B 3/10, B22D 15/00

(54) **RAD FÜR EIN KRAFTFAHRZEUG**
WHEEL FOR A MOTOR VEHICLE
ROUE POUR VEHICULE

(30) Priorität: 11.06.1999 DE 19926573
(43) Veröffentlichungstag der Anmeldung: 27.03.2002
(73) Patentinhaber: Dr.Ing. h.c.F. Porsche Aktiengesellschaft, 70435 Stuttgart (DE)
(72) Erfinder: HUMMEL, Frank, D-72800 Eningen (DE); STACH, Jens, D-71296 Heimsheim (DE)
(86) Internationale Anmeldenummer: EP0004581
(87) Internationale Veröffentlichungsnummer: WO00076785

(56) Entgegenhaltungen:
- DE-C- 19 501 508
- DE-U- 29 723 749
- US-A- 3 253 862

## Beschreibung

Die Erfindung bezieht sich auf ein Rad für ein Kraftfahrzeug und einem Verfahren zur Herstellung des Rades nach dem Oberbegriff des Anspruchs 1 und 10.

In der Patentanmeldung (DE 197 54959) ist ein Fahrzeugrad beschrieben, das Hohlräume zur Gewichtserleichterung aufweist, in denen verbleibende Kerne angeordnet sind. Diese werden ins Kokillenwerkzeug eingelegt und vom Gußwerkstoff umgossen. Diese Kerne bestehen entweder aus einem mit einer Haut ummantelten Metallschaum oder aus einer hohlen geschlossenen Schale. Desweiteren ist aus der DE 297 23 749 U1 ein Fahrzeugrad bekannt, das zur Bildung einer Radspeiche mit Metallschaum aufgefüllt ist, der zur Innenseite des Felgensterns freiliegend angeordnet ist. Weitere Hohlräume des Rades sind mit einem verbleibenden Kern aus Metallschaum versehen, wozu auch der nach außen offene Metallschaum in der Radspeiche angeordnet ist.

Aufgabe der Erfindung ist es, ein Fahrzeugrad, insbesondere ein Fahrzeugrad mit Hohlspeichen zu schaffen, das in einfacher Weise herstellbar ist und ein geringes Gewicht bei optimaler Stabilität aufweist.

Diese Aufgabe wird erfindungsgemäß durch die Merkmale des Anspruchs 1 und der Verfahrensansprüche 10 und 11 gelöst. Weitere vorteilhafte Merkmale beinhalten die Unteransprüche.

Die mit der Erfindung hauptsächlich erzielten Vorteile bestehen darin, daß sowohl geschlossene Hohlräume als auch offene Hohlräume des Rades mit einem verbleibenden Kern herstellbar sind. So ist der Kern im Bereich eines Felgenhorns des Rades in einem von der Felge und einem Felgenstern gebildeten nach einer Seite hin offenen Ringraum angeordnet. Hierzu wird nach der Erfindung ein Kokillenwerkzeug mit Schiebern verwendet, die dicht nebeneinander im Anschluß zu einer Unterkokille herausziehbar angeordnet sind. Der erste, unmittelbar neben der Unterkokille liegende Schieber weist eine Aussparung für einen aus dem Ringraum herausragendes Kernteil auf. Der zweite Schieber schließt diese Aussparung und den Ringraum dicht ab.

Es wird somit in einfacher Weise möglich, den Kern im Ringraum des Felgenhornes so anzuordnen, daß nach einer mechanischen Bearbeitung ein stabiles Felgenhorn entsteht. Gleichzeitig kann auch ein zu einer Felge auswalzbares Gußstück im Kokillenwerkzeug hergestellt werden, was aber nicht zwingend ist. Vielmehr kann auch eine "fertige" Felge im Endzustand im Kokillenwerkzeug hergestellt werden.

Der Kern kann nach der Erfindung in Hohlräumen einer Felge mit und ohne Hohlspeichen verwendet werden. Die relevanten Hohlräume des Rades im Nabenbereich, in der Radspeiche sowie im Hornbereich können entweder alle oder auch nur zum Teil mit einem Kern versehen sein. So ist bei einem Rad mit Hohlspeichen der Kern zwingend im Nabenbereich, in der Hohlspeiche sowie im Hornbereich vorgesehen, da dies die Festlegung in der Kokille erforderlich macht. Bei einem Rad ohne Hohlspeichen ist es wahlweise möglich, die verbleibenden Hohlräume mit verbleibenden Kernen zu versehen.

Damit eine einfache Bearbeitung der Kernmarken - diese halten den Kern in dem Kokillenwerkzeug - möglich wird, sind die Kernmarken zur Designaußenseite des Rades hin ausgerichtet. Die Kernmarken können aus einer Vielzahl von Metallstiften bestehen, die verteilt und vorragend zur Oberfläche des Kerns angeordnet sind und eine Kernlagerung nach Art eines Nadelkissens bilden.

Der Kern im Felgenhorn weist zumindest eine Kernmarke auf, die durchgebohrt eine Aufnahmebohrung für ein Reifenventil bildet und somit ein Bearbeitungsvorgang eingespart wird.

Der Kern kann zur besseren formschlüssigen Verbindung mit dem Gußwerkstoff eine konturierte bzw. rauhe Oberfläche aufweisen.

Der Kern kann aus einem Metallschaum mit einer umgebenen Schicht oder Haut oder einem metallischen oder keramischen geschlossenen Hohlkörper bestehen.

Der Hohlkörper kann erfindungsgemäß mehrteilig oder einteilig ausgeführt sein und durch Umformverfahren oder hydrogeformt hergestellt werden. Die Materialien aus denen der Hohlkörper bestehen kann, sind Keramikwerkstoffe, Aluminiumlegierungen oder Stahllegierungen. Der Hohlkörper kann zusätzlich mit aufschäumbarem Metall ausgefüllt sein, um eine optimale Stabilität des Hohlkörpers zu erreichen.

Der Metallschaumkern kann beispielsweise aus einem Aluminiumschaum bestehen, der gegen Einflüsse der Gußschmelze während des Gießvorganges geschützt ist. Diese Schutzschicht kann durch im Oxidationsverfahren (Anodisierung) oder durch keramische - oder Spritzbeschichtung bzw. Tauch- oder Spritzbeschichtung mit anhaftenden Materialien herstellt werden.

Nach einer weiteren Ausführung der Erfindung kann das Rad auch vollständig aus einem Kunststoff bestehen, wobei wie bei einem Rad aus Metall die Hohlräume mit verbleibenden Kernen versehen sind.

Damit das im Gießverfahren hergestellte Rad mit lokalen Verstärkungen versehen werden kann, sind am Kern oder an der Kokille metallische oder keramische Langfaserelemente angeordnet, die umgossen werden.

Ausführungsbeispiele der Erfindung sind in den Zeichnungen dargestellt und werden im folgenden näher beschrieben.

Es zeigen
- Fig. 1: ein Rad im Schnitt mit einem im Felgenhorn angeordneten verbleibenden Kernen in einem offenen Ringraum sowie angedeutet ein Kokillenwerkzeug mit zwei Schiebern,
- Fig. 2: ein Rad im Schnitt mit einem verbleibenden Kern im Felgenhorn und im Nabenbereich,
- Fig. 3: ein Rad im Schnitt mit einem im Felgenhorn angeordneten Kern und einem geschlossenen Hohlraum,
- Fig. 4: ein Rad im Schnitt mit in einer Hohlspeiche, sowie im Nabenbereich und im Felgenhorn angeordneten Kernen, sowie nach außen gerichteten Kernmarken,
- Fig. 5: ein Rad im Schnitt mit als Nadelstifte ausgebildeten Kernmarken am Kern und
- Fig. 6: ein Horizontalschnitt durch eine Radspeiche mit am Kern gehaltenen Nadelstiften.

Das Rad 1 weist in einem Ringraum2 bzw. in Hohlräumen 3, 4 und 5 jeweils einen nach dem Gießvorgang verbleibenden Kern 6, 7, 8, 9 auf. Diese Kerne können aus Metallschaum mit einer umgebenden Haut bzw. Schicht oder aus einem Hohlkörper, bestehend aus einer oder mehreren Schalen gebildet sein oder aus einem Hohlkörper mit Metallschaum aufgefüllt bestehen.

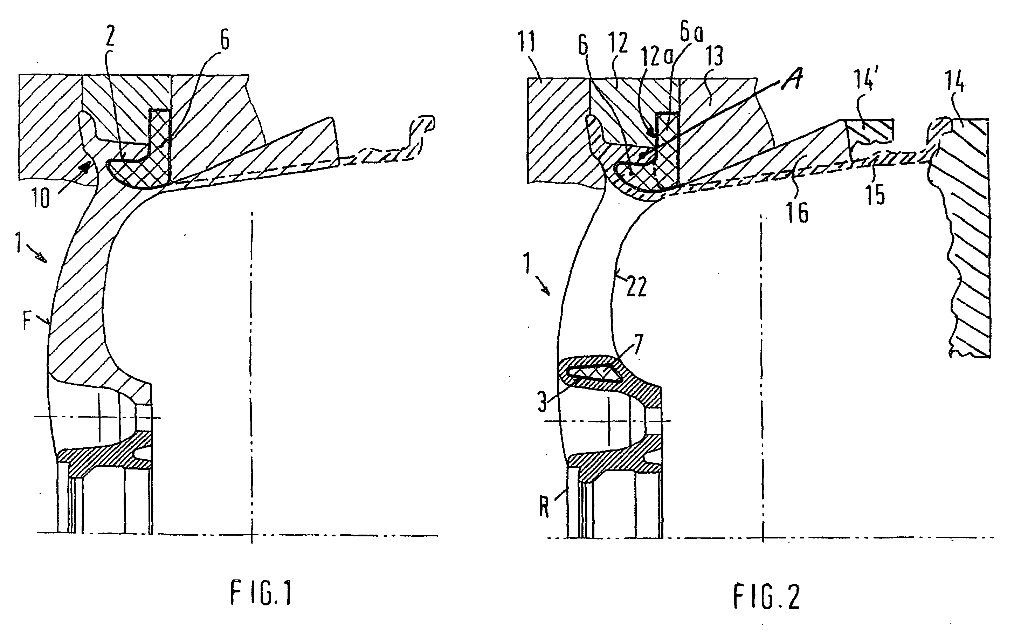

In Fig. 1 ist der Kern 6 im Felgenhorn 10 in einem nach einer Seite hin offenen Ringraum 2 angeordnet. Der Ringraum 2 ist zwischen der Felge 15 und einem hierzu beabstandeten Ansatzring A am Felgenhorn 10 angeordnet. Der Ringraum 2 ist zur Rückseite des Felgensterns F hin geöffnet und angrenzend zur Felge angeordnet. Zur Anordnung dieses Kernes 6 weist das Kokillenwerkzeug, bestehend aus einem Kokillenunterteil 11, zwei radialen Schiebern 12, 13 und einem Kokillenoberteil 14 bzw. 14' auf. Der Kern 6 wird nach dem Gießvorgang entsprechend der Endkontur der Felge abgedreht.

Die Felge 15 des Rades 1 kann im Kokillenwerkzeug 14 bzw. 14' entweder als auswalzbares Gußteil 6 oder als "fertige" Felge 15 gegossen werden, was in den Figuren 1 und 2 näher dargestellt ist.

Der Felgenbereich wird um ein schmiedeähnliches, höherfestes und/oder höherduktiles Metallgefüge zu erzielen, warm oder kalt ausgewalzt bzw. im flow-forming-Verfahren hergestellt. Es können zur Herstellung der Radteile verschiedene Gießverfahren angewendet werden, wie "Multiinjektion Niederdruckguß" (mehrere Angußstellen) zur Verringerung der thermischen- und mechanischen Belastung des Kernes während des Gießvorganges. "Druckguß" und dessen Varianten (z.B. Vakuraldruckguß), "Squeeze Casting" und dessen Varianten (z.B. Indirect Squeeze Casting), "Thixsocasting" und dessen Varianten.

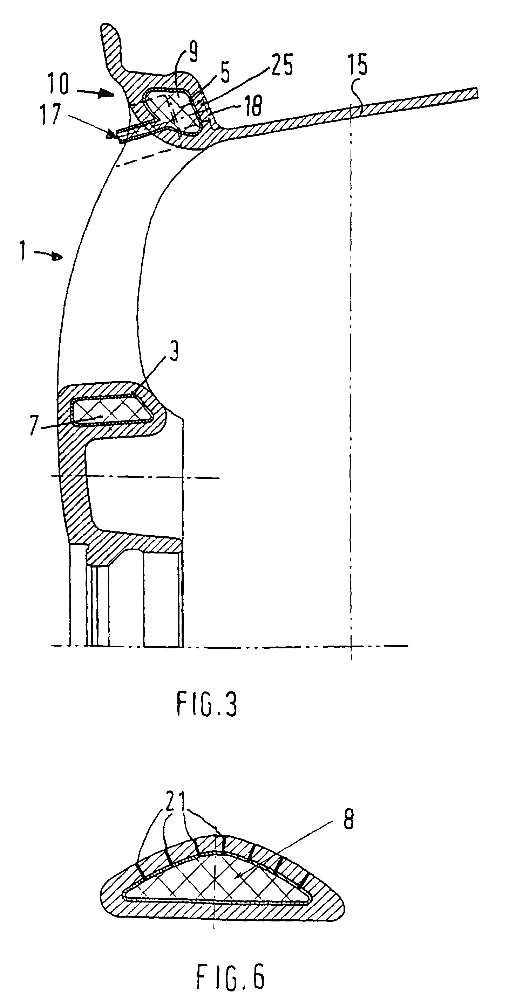

In Fig. 3 ist unter anderem ein geschlossener Hohlraum 5 des Rades 1 mit einem Kern 9 im Felgenhorn 10 gezeigt. Dieser ist über mindestens eine Kernmarke 17 im Kokillenwerkzeug gehalten. Durch Aufbohren dieser Kernmarke 17 und der dahinterliegenden Wand 18 der Felge 15 wird eine Aufnahmebohrung 25 für ein Reifenventil geschaffen.

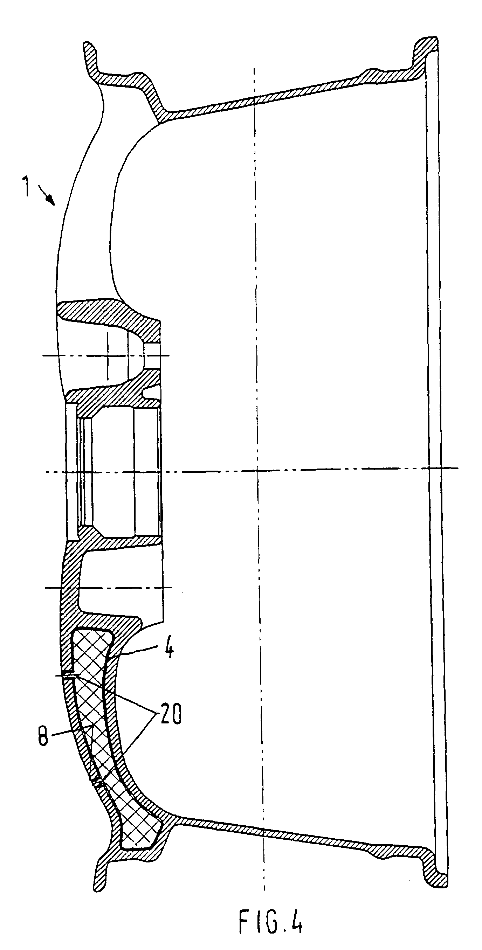

Die Kerne sollen vorzugsweise über Kernmarken 17; 20 im Kokillenwerkzeug gehalten werden, welche sich zur Außenseite des Rades 1 hin erstrecken, wie Fig. 4 beispielshaft zeigt.

Die Kernmarken können auch aus mehreren metallischen Stiften 21 bestehen, die sich verteilt über die Oberfläche des Kerns erstrecken und eine Kernlagerung nach Art eines Nadelkissens ergeben.

Der Kern ist als Metallschaumkern, vorzugsweise mit einer solchen Beschichtung oder Haut versehen, die den Metallschaumkern gegen Einflüsse der Schmelze während des Gießvorganges beständig macht. Die Oberfläche der Beschichtung oder der Außenhaut kann eine konturierte Flächenstruktur aufweisen, d.h. die Beschichtung soll erfindungsgemäß eine gewisse Rauhigkeit aufweisen, damit eine innige Verbindung zwischen Gußwerkstoff und verlorenem Kern besteht.

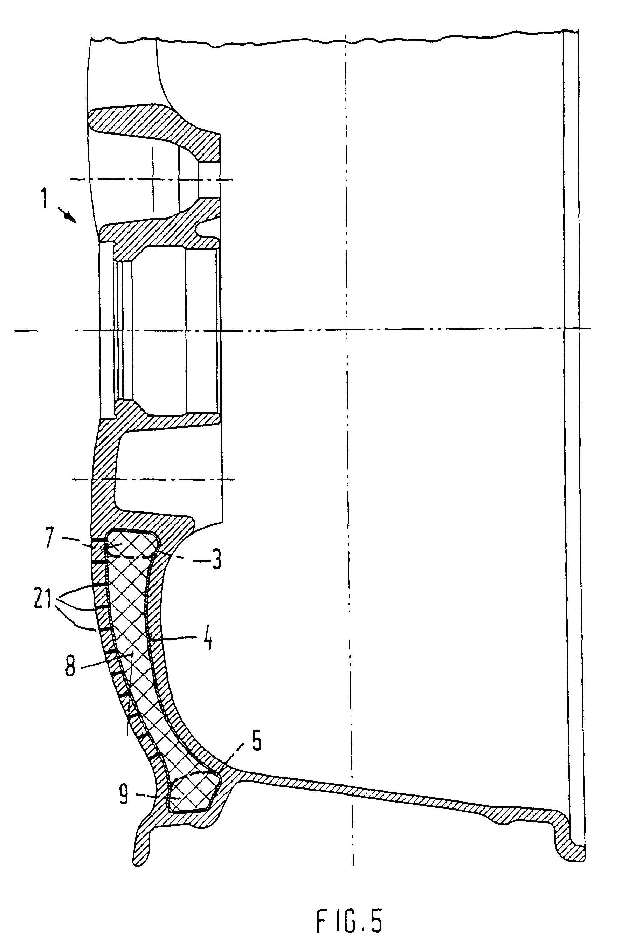

Wie insbesondere Fig. 5 zeigt, weist ein Rad mit Hohlspeichen in den Hohlräumen 3, 4 und 5 jeweils einen Kern 7, 8 und 9 auf. Der Kern 9 gemäß Fig. 5 kann auch aus einem Kern 6 gem. Fig. 1 und 2 bestehen. Dieser Kern 6 kann auch bei einer Vollgußfelge verwendet werden.

Der Kern 6 ist in dem einseitig offenen Ringraum 2 im Felgenhorn 10 zwischen einem Felgenstern F und der Felge 15 vorgesehen. Hierzu ist ein Kokillenwerkzeug 11, 14 mit zwei Schiebern 12, 13 erforderlich. Der eine Schieber 12 weist eine Aussparung 12a auf, die vom weiteren Schieber 13 dicht abgeschlossen wird. In dieser Aussparung 12a ist ein herausragendes Kernteil 6a angeordnet, welches im Fertigzustand des Rades 1 entlang der strichpunktierten Linie abgedreht wird.

Zur lokalen Verstärkung des Rades sind am Kern oder/und an der Kokille Verstärkungselemente, beispielsweise metallische oder keramische Langfaserelemente vorgesehen, die mit eingegossen werden.

Nach einer speziellen Ausführung kann das Fahrzeugrad auch aus einem gießfähigen Kunststoff, wie Thermoplast oder ein Duroplast bestehen, wobei der oder die Kerne wie bei einem Rad aus einem Leichtmetall-Werkstoff einsetzbar sind. Die Kerne können bei einem Kunststoffrad erfindungsgemäß auch aus einem entsprechend temperaturbeständigen Kunststoffschaum oder Kunststoffhohlkörpern in Schalenbauweise bestehen. Der Kunststoff kann kurzfaser- oder langfaserverstärkt, gewebe- oder mattenverstärkt ausgeführt sein, wobei diese Verstärkungen am Kern bzw. an der Kokille entsprechend gehalten sind.

## Patentansprüche

1. Rad (1) für ein Kraftfahrzeug, aus Leichtmetall bestehend und in einem Gießverfahren herstellbar, wobei in wenigstens einem Hohlraum des Rades (1) ein verbleibender Kern (6, 7, 8, 9) aus einem metallischen Werkstoff angeordnet ist, **dadurch gekennzeichnet, daß** der Kern (6) im Bereich eines Felgenhornes (10) in einem offenen Ringraum (2) des Rades (1) zwischen der Felge (15) und einem hierzu beabstandeten Ansatzring (A) am Felgenhorn (10) angeordnet ist und der Ringraum (2) zur Rückseite des Felgensterns (F) hin geöffnet ist und angrenzend zur Felge (15) angeordnet ist.

2. Rad nach Anspruch 1, **dadurch gekennzeichnet, daß** der bzw. die Kerne (6, 7, 8, 9) zur Außenseite des Rades (1) hinweisende Kernmarken (17, 20, 21) zur Lagefixierung im Kokillenwerkzeug (11,12,13,14; 14') aufweisen.

3. Rad nach Anspruch 1, **dadurch gekennzeichnet, daß** eine Aufnahmebohrung (25) für ein Reifenventil durch zumindest eine Kernmarke (17) des Kerns (9) im Ringraum (5) des Felgenhorns (10) sowie durch eine Wandung (18) der Felge (15) verläuft.

4. Rad nach den Ansprüchen 1, 2 oder 3, **dadurch gekennzeichnet, daß** die Kernmarken aus mehreren Metallstiften (21) bestehen und über die Fläche des Kerns verteilt angeordnet sind.

5. Rad nach Anspruch 1, **dadurch gekennzeichnet, daß** die Oberfläche des Kerns als konturierte Fläche ausgeführt ist.

6. Rad nach Anspruch 1, **dadurch gekennzeichnet, daß** der Kern aus Metallschaum mit einer umgebenden Schicht besteht.

7. Rad nach Anspruch 1, **dadurch gekennzeichnet, daß** der Kern aus einem metallischen oder keramischen schalenförmigen Hohlkörper besteht.

8. Rad nach Anspruch 7, **dadurch gekennzeichnet, daß** der schalenförmige Hohlkörper mit Metallschaum ausgefüllt ist.

9. Rad nach den Anspruch 1, **dadurch gekennzeichnet, daß** das im Gießverfahren hergestellte Rad lokale Verstärkungselemente aufweist, die am Kern oder in der Kokille für den Gießvorgang positioniert sind.

10. Verfahren zur Herstellung eines Rades nach den Ansprüchen 1 bis 9, **dadurch gekennzeichnet, daß** zur Herstellung des Ringraumes (2) mit Kern (6) ein Kokillenwerkzeug (11, 14; 14') mit Schiebern (12, 13) verwendet wird, die dicht nebeneinander im Anschluß zu einer Unterkokille (11) und einer Oberkokille (14; 14') herausziehbar angeordnet sind, wobei der erste unmittelbar neben der Unterkokille (11) liegende Schieber (12) eine Aussparung (12a) für ein aus dem Ringraum (2) herausragendes Kernteil (6a) des Kerns (6) aufweist und der zweite Schieber (13) die Aussparung (12a) und den offenen Ringraum (2) dicht abschließt.

11. Verfahren zur Herstellung eines Rades nach den Ansprüchen 1 bis 9, **dadurch gekennzeichnet, daß** die Felge (15) im Kokillenwerkzeug (11, 14; 14' und 12, 13) als auswalzbares Gußteil (16) zwischen der Unterkokille (11) und dem zweiten Schieber (13) angeordnet ist.

## Claims

1. A wheel (1) for a motor vehicle, consisting of light metal and capable of being produced in a casting process, wherein a permanent core (6, 7, 8, 9) of a metallic material is arranged in at least one cavity in the wheel (1), **characterized in that** the core (6) is arranged in the region of a rim flange (10) in an open annular space (2) in the wheel (1) between the rim (15) and an attachment ring (**A**) spaced therefrom on the rim flange (10), and the annular space (2) is opened towards the rear side of the rim spider (**F**) and is arranged adjacent to the rim (15).

2. A wheel according to Claim 1, **characterized in that** the core or cores (6, 7, 8, 9) has or have markings (17, 20, 21) pointing towards the outside of the wheel (1) for fixing the position in the casting-mould tool (11, 12, 13, 14; 14').

3. A wheel according to Claim 1, **characterized in that** a receiving bore (25) for a tyre valve extends through at least one marking (17) on the core (9) in the annular space (5) in the rim flange (10) and through a wall (18) of the rim (15).

4. A wheel according to Claim 1, 2 or 3, **characterized in that** the core markings comprise a plurality of metal pins (21) and are arranged distributed over the face of the core.

5. A wheel according to Claim 1, **characterized in that** the surface of the core is designed in the form of a contoured face.

6. A wheel according to Claim 1, **characterized in that** the core consists of metal foam with a surrounding coating.

7. A wheel according to Claim 1, **characterized in that** the core consists of a metallic or ceramic shell-shaped hollow body.

8. A wheel according to Claim 7, **characterized in that** the shell-shaped hollow body is filled with metal foam.

9. A wheel according to Claim 1, **characterized in that** the wheel produced in the casting process comprises local reinforcement members which are positioned on the core or in the mould for the casting process.

10. A method of producing a wheel according to Claims 1 to 9, **characterized in that** a casting-mould tool (11, 14; 14') with slides (12, 13), which are arranged in a retractable manner closely adjacent to one another adjoining a lower mould (11) and an upper mould (14; 14'), is used to produce the annular space (2) with the core (6), wherein the first slide (12) situated immediately adjacent to the lower mould (11) has a recess (12a) for a part (6a) of the core (6) projecting out of the annular space (2) and the second slide (13) tightly closes the recess (12a) and the open annular space (2).

11. A method of producing a wheel according to Claims 1 to 9, **characterized in that** the rim (15) is arranged in the casting-mould tool (11, 14; 14' and 12, 13) as a cast part (16), capable of rolling, between the lower mould (11) and the second slide (13).

## Revendications

1. Roue (1) pour un véhicule automobile, constituée d'un métal léger et pouvant être fabriquée par un procédé de coulée, dans laquelle dans au moins une cavité de la roue (1) est disposé un noyau (6, 7, 8, 9) à demeure constitué d'un matériau métallique, **caractérisée en ce que** le noyau (9) est disposé dans la zone d'une corne de jante (10) dans un espace annulaire (2) ouvert de la roue (1), entre la jante (15) et un appendice annulaire (A) espacé de celle-ci, sur la corne de jante (10), et l'espace annulaire (2) est ouvert vers le côté arrière de l'étoile de jante (F) et est disposé adjacent à la jante (15).

2. Roue selon la revendication 1, **caractérisée en ce que** le ou les noyaux (6, 7, 8, 9) présentent des marques (17, 20, 21) dirigées vers le côté extérieur de la roue (1), pour la fixation en position dans l'outil de moulage (11, 12, 13, 14 ; 14').

3. Roue selon la revendication 1, **caractérisée en ce qu'**un perçage de réception (25) pour une valve de pneu passe au moins par une marque (17) du noyau (9) dans l'espace annulaire (5) de la corne de jante (10), ainsi qu'à travers une paroi (18) de la jante (15).

4. Roue selon les revendications 1, 2 ou 3, **caractérisée en ce que** les marques du noyau sont constituées de plusieurs broches métalliques (21) et sont disposées réparties sur la surface du noyau.

5. Roue selon la revendication 1, **caractérisée en ce que** la surface du noyau est réalisée en tant que surface profilée.

6. Roue selon la revendication 1, **caractérisée en ce que** le noyau est en mousse métallique avec une couche l'entourant.

7. Roue selon la revendication 1, **caractérisée en ce que** le noyau est constitué d'un corps creux métallique ou céramique en forme de coquille.

8. Roue selon la revendication 7, **caractérisée en ce que** le corps creux en forme de coquille est rempli d'une mousse métallique.

9. Roue selon la revendication 1, **caractérisée en ce que** la roue fabriquée par un procédé de coulée présente des éléments locaux de renfort qui sont positionnés sur le noyau ou dans le moule pour l'opération de coulée.

10. Procédé de fabrication d'une roue selon les revendications 1 à 9, **caractérisé en ce que** pour réaliser l'espace annulaire (2) avec noyau (6) on utilise un outil de moulage (11, 14 ; 14') avec coulisseaux (12, 13) qui sont disposés serrés côte à côte à la suite d'une coquille inférieure (11) et d'une coquille supérieure (14 ; 14') de manière à pouvoir être extraits, le premier coulisseau (12) qui se situe directement à côté de la coquille inférieure (11) présentant une découpe (12a) pour une partie (6a) du noyau (6) ressortant de l'espace annulaire (2), et le deuxième coulisseau (13) fermant de manière étanche la coquille (12a) et l'espace annulaire (2) ouvert.

11. Procédé de fabrication d'une roue selon les revendications 1 à 9, **caractérisé en ce que** la jante (15) est disposée dans l'outil de moulage (11, 14. 14' et 12, 13) en tant qu'élément en fonte (16) pouvant être laminé, entre la coquille inférieure (11) et le deuxième coulisseau (13).
